# FASCICULE DE BREVET EUROPEEN

(11) **EP 3 117 172 B1**
(45) Date de publication et mention de la délivrance du brevet: **02.05.2018**
(21) Numéro de dépôt: 15714554.1
(22) Date de dépôt: 03.03.2015
(51) Int. Cl.: F28F 9/013, F16L 3/22, F28D 7/02, F28D 21/00

(54) **SYSTEME DE MAINTIEN DE TUYAUX**
ROHRUNTERSTÜTZUNGSSYSTEM
PIPE SUPPORTING SYSTEM

(30) Priorité: 05.03.2014 FR 1451789
(43) Date de publication de la demande: 18.01.2017
(73) Titulaire: SAFRAN AIRCRAFT ENGINES, 75015 Paris (FR)
(72) Inventeur: LE LOUEDEC, Dominique, 27950 Saint Marcel (FR); STERNCHUSS, Arnaud, 78100 Saint Germain-en-Laye (FR); RAVIER, Nicolas, 27200 Vernon (FR); MILLON, Frederick, 27950 Saint Marcel (FR); BUCHER, Bruno, 27340 Pont de l'Arche (FR)
(74) Mandataire: Duflos, Bertrand Guillaume
(86) Numéro de dépôt international: PCT/FR2015/050510
(87) Numéro de publication internationale: WO 2015/132522

(56) Documents cités:
- EP-A2- 0 351 247
- WO-A1-97/37164
- GB-A- 2 463 482
- JP-A- S5 297 462

## Description

L'invention concerne un système de maintien pour maintenir au moins un tuyau et notamment, un tuyau soumis à des forces tendant à provoquer son déplacement par rapport à la structure sur laquelle il est fixé. Un tel système de maintien selon le préambule de la revendication 4 est divulgué par le brevet GB 2 463 482. De telles forces peuvent être causées notamment par des accélérations de cette structure, et/ou par des dilatations ou contractions thermiques que subit (ou subissent) le tuyau et/ou la structure et les turbulences d'écoulement des gaz.

Dans ce document, la présente invention sera décrite essentiellement en faisant référence à un tuyau (unique) ; il doit être bien compris cependant que l'invention est également applicable à un système de maintien servant à maintenir plusieurs tuyaux distincts les uns des autres.

Une application importante de l'invention concerne un échangeur thermique pour moteur fusée. Cet échangeur est constitué principalement par un tuyau enroulé de manière à former des spires hélicoïdales, appelé serpentin, fixé à l'intérieur d'un tube cylindrique (de section circulaire) dont le diamètre est seulement légèrement supérieur à celui des spires du serpentin.

Cet échangeur de chaleur, appelé réchauffeur, sert à réchauffer l'hydrogène utilisé comme carburant par le moteur fusée, en prélevant de la chaleur sur les gaz d'échappement du moteur fusée. Ainsi, l'hydrogène liquide est injecté dans le serpentin à une température d'environ 40K ; il ressort du serpentin à une température d'environ 400K. L'hydrogène est réchauffé par les gaz d'échappement circulant dans le tube cylindrique qui ont une température voisine de 700K.

On comprend que le serpentin tend à subir des dilatations thermiques différentielles considérables, du fait des différences de température très élevées auxquelles il est soumis. Ces différences de températures tendent à entraîner des déformations du serpentin, permises notamment par la faible épaisseur de celui-ci (seulement 1 mm, pour un diamètre d'enroulement voisin de 250 mm).

Le système de maintien du serpentin doit être capable de limiter à des valeurs acceptables les déplacements du serpentin dus à ces dilatations et contractions thermiques.

D'autre part, étant embarqué à bord d'une fusée, le serpentin est soumis à des vibrations et accélérations très fortes, ainsi qu'aux turbulences des gaz. Il doit donc également être maintenu suivant les directions radiale et axiale de manière à résister à ces sollicitations.

Inversement, le maintien mécanique du serpentin, qui est indispensable pour les raisons précédentes, doit être assuré tout en maintenant un niveau de contraintes mécaniques dans le serpentin le plus faible possible. En effet, de telles contraintes sont susceptibles d'entraîner des détériorations dans le serpentin, et notamment une détérioration des soudures formées aux extrémités du serpentin pour son raccordement aux parties amont et aval du circuit de distribution d'hydrogène du moteur fusée, et ainsi de causer des fuites d'hydrogène dans le moteur. De telles fuites sont naturellement exclues.

L'objectif d'un premier aspect de l'invention est donc de proposer un système de maintien pour maintenir au moins un tuyau, apte à maintenir ce ou ces tuyau(x) en dépit des sollicitations que celui-ci subit ou que ceux-ci subissent, que ces sollicitations soient liées à des dilatations ou contractions thermiques, et/ou dues aux vibrations ou aux accélérations subies par le ou les tuyaux, et/ou par une structure sur laquelle le ou les tuyaux sont fixés, tout en maintenant un niveau de contraintes mécaniques minimales dans le ou les tuyau(x), et à un coût modéré.

Cet objectif est atteint grâce au fait que le système de maintien comprend un peigne comportant un barreau et une pluralité de dents parallèles perpendiculaires au barreau, et un dispositif de blocage apte à empêcher un tuyau passant entre deux desdites dents de s'écarter du barreau.

Dans la phrase précédente, le tuyau est supposé avoir une forme cylindrique ; ainsi, pour que le dispositif de blocage soit apte à empêcher un tuyau passant entre deux dents de s'écarter du barreau, il suffit que le passage formé entre les deux dents considérées soit au moins partiellement obstrué par ledit dispositif de blocage (placé dans et/ou en regard dudit passage), le dispositif de blocage étant par ailleurs maintenu à distance fixe du barreau. Le peigne peut notamment présenter entre les deux dents considérées un passage libre qui inclut le volume d'un tronçon de tuyau, d'axe globalement perpendiculaire au barreau et aux dents, et le dispositif de blocage comporte une paroi ou un obstacle, disposé de telle sorte que cette paroi ou cet obstacle est nécessairement rencontré ou heurté par ce tronçon de tuyau lors d'un déplacement de ce tronçon entre les dents du peigne considérées dans le sens éloignant le tronçon du peigne pour le dégager du peigne.

Avantageusement grâce à l'invention, lorsqu'un ou plusieurs tuyaux sont disposés parallèlement de manière à passer entre les dents du peigne, le dispositif de blocage maintient ce ou ces tuyaux en position et par suite, permet que le système de maintien assure de manière sûre le maintien de ce ou de ces tuyaux.

Le maintien d'un ou plusieurs tuyaux par le dispositif de blocage se fait de préférence de manière relativement lâche, pour éviter d'appliquer au(x) tuyau(x) des contraintes inutiles. Le système de maintien peut notamment permettre un déplacement des tuyaux suivant la direction axiale des passages libres entre les dents du peigne, c'est-à-dire dans la direction axiale du ou des tuyau(x).

Le tuyau a généralement la forme d'un serpentin, que l'on cherche à maintenir dans un tube. Dans ce cas, le maintien relativement lâche des différentes spires du serpentin dans le tube par le dispositif de blocage permet une dilatation des spires du serpentin et par suite, une rotation éventuelle d'une ou plusieurs spires par rapport au tube.

Dans le système de maintien, les dispositions suivantes sont préférentiellement adoptées, isolément ou en combinaison :
- Le dispositif de blocage peut prendre appui sur au moins deux dents du barreau, et notamment deux dents d'extrémité situées aux extrémités du barreau.
- Le dispositif de blocage peut prendre appui sur au moins une dent intermédiaire distante des extrémités du barreau.
- Le dispositif de blocage peut être constitué essentiellement par une goupille. Une goupille désigne ici une pièce de forme allongée, notamment une tige. La tige peut éventuellement être creuse, et/ou fendue.
- au moins une dent du peigne peut présenter un trou, et la goupille peut être configurée pour (et apte à) passer dans celui-ci.
- cette goupille peut comprendre une enveloppe de forme générale cylindrique fendue suivant un axe de l'enveloppe. Cette forme en effet permet une déformation radiale élastique de la goupille.
- Le dispositif de blocage peut présenter au moins une encoche d'appui de tuyau, notamment de forme sensiblement cylindrique ou torique.
- L'encoche d'appui de tuyau peut permettre un appui de celui-ci sur une étendue suivant un axe du tuyau (ou du passage prévu pour le tuyau) au moins égale à un diamètre maximal de passage du tuyau.
- Au moins un passage du peigne entre deux dents adjacentes peut présenter une inclinaison par rapport à un axe du barreau.
- Au moins un passage du peigne entre deux dents adjacentes peut présenter une forme cylindrique ou torique.
- Le système peut comprendre en outre deux supports disposés aux extrémités du peigne. Ces supports peuvent être configurés pour maintenir le peigne de manière à permettre une rotation de celui-ci autour d'un axe du barreau.
- ces supports peuvent éventuellement maintenir ou contribuer à maintenir le dispositif de blocage. Le dispositif de blocage peut donc prendre appui sur au moins un support, ou éventuellement sur les deux supports.

Chacun des supports peut être configuré pour être fixé sur une paroi, par exemple la paroi d'un tube, sur lequel le(s) tuyau(x) doi(ven)t être fixé(s).

L'invention permet également d'obtenir un ensemble comportant une pluralité de systèmes de maintien fixés sur une paroi intérieure d'un tube cylindrique, disposés de manière axisymétrique autour d'un axe dudit tube. Un tel ensemble est adapté pour maintenir un tuyau enroulé en hélice dans le tube, dit serpentin. De préférence, les systèmes de maintien sont placés axialement (suivant l'axe du tube) à des positions régulièrement échelonnées, de manière à supporter les spires du serpentin en déformant celui-ci de manière minimale.

L'invention concerne également un échangeur thermique comportant au moins un système de maintien et/ou un ensemble tel que défini(s) précédemment.

L'invention concerne enfin plus globalement un moteur pour fusée, ou encore une unité de production industrielle, comportant au moins un système et/ou un ensemble et/ou un échangeur thermique tel que défini(s) précédemment.

Un deuxième aspect de l'invention concerne un procédé de montage d'un échangeur thermique constitué principalement par un serpentin comportant une pluralité de spires, agencé à l'intérieur d'un tube. Conformément à ce deuxième aspect de l'invention, l'échangeur thermique est monté grâce aux opérations suivantes :
a) on fournit :
   le tube, le serpentin et une goupille ;
   un peigne comportant un barreau et une pluralité de dents parallèles, perpendiculaires au barreau ; et
   deux supports, aptes à être disposés aux extrémités du peigne et à maintenir le peigne de manière à permettre une rotation de celui-ci autour d'un axe du barreau ;
b) on positionne et on fixe un premier des deux supports sur la paroi intérieure du tube ;
c) on positionne le peigne dans le tube, en maintenant le peigne de telle sorte qu'il soit rabattu contre ladite paroi ;
d) on met en place le serpentin (c'est-à-dire, à l'intérieur du tube et généralement, disposé coaxialement par rapport au tube) ;
e) après les étapes b) et c), on fait pivoter le peigne afin que ses dents soient orientées radialement dans le tube et bloquent axialement des spires du serpentin (au moins une spire, éventuellement la totalité des spires) ;
g) on positionne le deuxième des supports et on fixe celui-ci sur la paroi intérieure du tube ; et
h) on fixe la goupille au peigne et/ou aux supports de manière à constituer un dispositif de blocage (30) empêchant toutes les spires ou une partie des spires passant entre lesdites dents de s'écarter du barreau.

Dans le procédé défini ci-dessus, que les étapes c) et d) peuvent être effectuées dans un ordre quelconque (Etape c) avant l'étape d), ou étape d) avant l'étape c)).

En effet, tant que le peigne est disposé en position rabattue contre la paroi (c'est-à-dire que l'axe des dents est localement sensiblement parallèle à la paroi), le peigne et le serpentin peuvent être placés ou déplacés dans le tube indépendamment l'un de l'autre.

Dans un mode de mise en oeuvre, la goupille fournie à l'étape a) est choisie apte à passer à travers au moins un trou d'une dent du peigne.

Dans ce cas, le procédé peut notamment comporter une étape f) précédant l'étape g), et durant laquelle on place la goupille en la faisant passer dans ledit au moins un trou d'une dent du peigne.

Dans un mode de mise en oeuvre, les étapes g) et h) sont réalisées simultanément ou sensiblement simultanément en positionnant le deuxième support sur la paroi intérieure du tube et en fixant la goupille au moins sur celui-ci de manière à bloquer la goupille et à constituer ainsi le dispositif de blocage.

Dans un mode de mise en oeuvre alternatif, le procédé est mis en oeuvre en utilisant une goupille élastique (au moins suivant sa direction longitudinale).

L'étape h) est alors réalisée après l'étape g), de la manière suivante :
on comprime la goupille suivant sa direction longitudinale ;
on met celle-ci en place ou en position entre les supports; puis
on libère ou on relâche alors celle-ci de telle sorte que celle-ci se trouve bloquée entre les supports.

A l'étape g) après avoir fixé le deuxième support, ou bien après avoir relâché la goupille dans le cas ci-dessus, tous les degrés de liberté de la goupille sont généralement bloqués, à l'exception de la rotation de la goupille autour de son axe longitudinal, qui peut rester possible.

Après ce blocage de la goupille, celles des spires du serpentin qui sont positionnées entre les dents du peigne sont bloquées par la goupille et empêchées de s'écarter du barreau du peigne. Comme cela a été indiqué précédemment, ces spires cependant conservent généralement la possibilité de se déplacer par rapport à la paroi du tube (et au peigne) suivant leur direction circonférentielle.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 est une vue schématique en perspective d'un réchauffeur pour moteur fusée, comprenant trois systèmes de maintien selon l'invention ;
- la figure 2 est une vue schématique en perspective d'un des systèmes de maintien présentés sur la figure 1 ;
- la figure 3 est une coupe schématique partielle, au droit d'un système de maintien, du réchauffeur de la figure 1 ; et

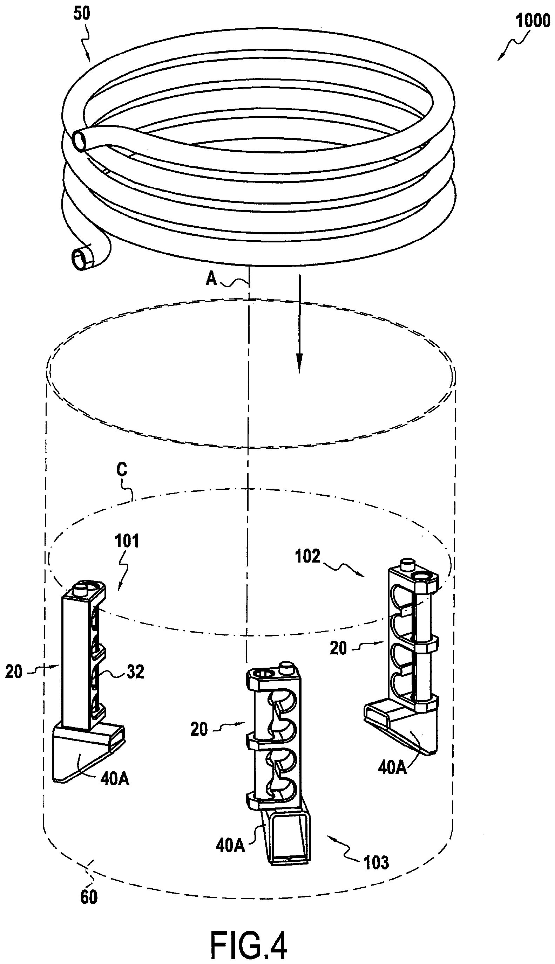

- la figure 4 est une vue schématique en perspective d'une étape de montage du réchauffeur représenté sur la figure 1.

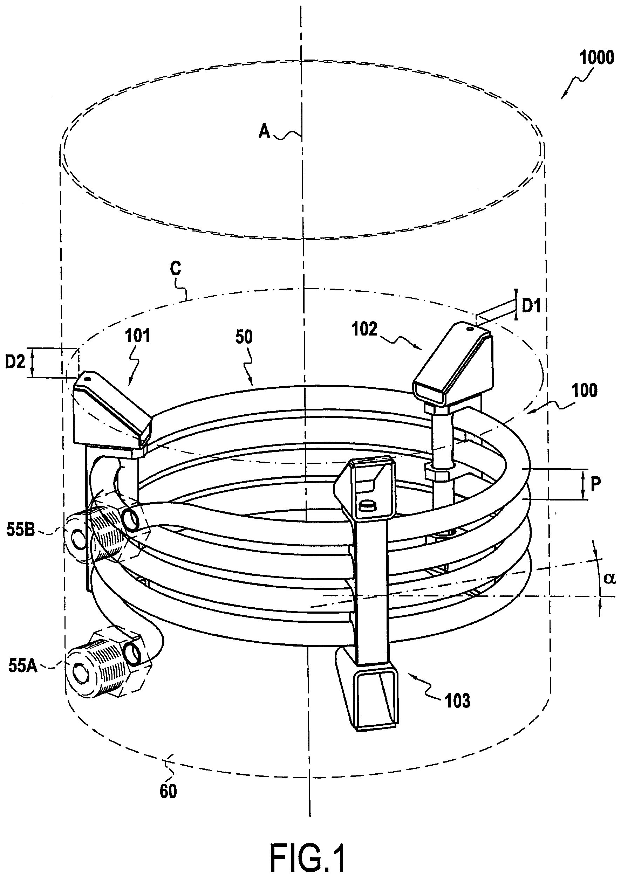

Comme on peut le voir sur la figure 1, un réchauffeur 100 comprend un serpentin 50, un tube cylindrique 60, et trois systèmes de maintien 101, 102, 103 identiques servant à fixer le serpentin 50 dans le tube 60.

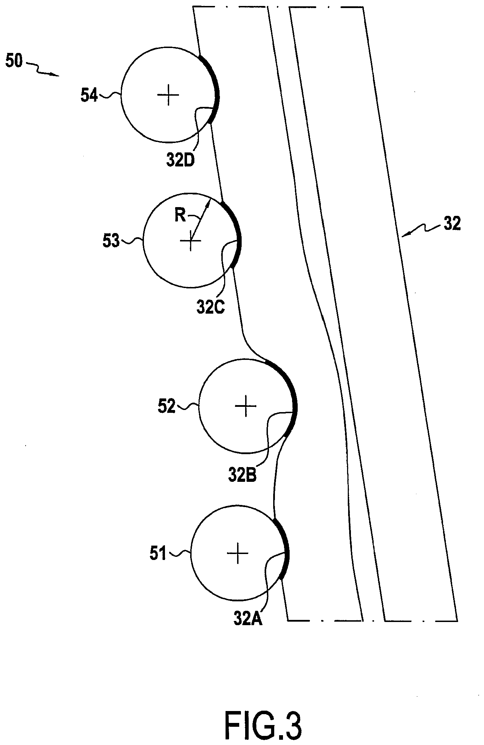

Le serpentin comporte quatre spires sensiblement identiques 51, 52, 53 et 54 (Fig.3) décalées deux à deux d'un pas P constant suivant l'axe A du tube 60. Les extrémités du serpentin passent à travers la paroi du tube 60 et sont fixées au moyen de raccords 55A, 55B, à des parties amont et aval (non représentées) du circuit de distribution d'hydrogène.

Le réchauffeur 100 fait partie d'un moteur pour fusée 1000 dont seul le réchauffeur est représenté.

De manière alternative on peut considérer que la référence 1000 désigne une unité industrielle, dont ferait partie le réchauffeur 100.

L'hydrogène est injecté à une température de 40K environ dans le serpentin, via le raccord 55A, et ressort du raccord 55B du serpentin à une température d'environ 400K.

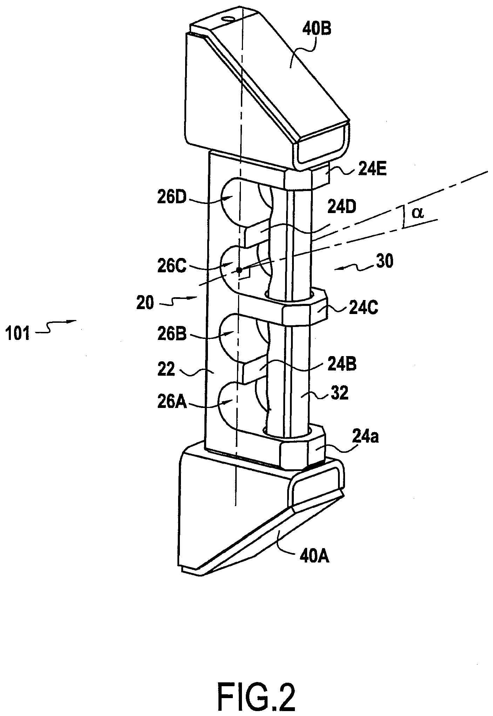

Les systèmes de maintien 101, 102 et 103 sont identiques ; aussi, seul le système 101 va maintenant être décrit, en relation avec la figure 2.

Le système 101 comporte un peigne 20 et un dispositif de blocage 30 constitué essentiellement par une goupille 32.

Le peigne 20 comporte un barreau 22 et cinq dents 24A,24B,24C,24D et 24E parallèles, perpendiculaires à le barreau. Les dents 24A à 24E sont désignées collectivement par la référence 24.

Entre les dents sont aménagés des passages 26A, 26B, 26C et 26D désignés collectivement comme les passages 26.

Lorsque le serpentin 50 est en position de maintien par le système de maintien 101, les différentes spires 51 à 54 passent respectivement dans les différents passages 26A à 26D, chaque spire passant entre deux dents adjacentes.

Chacune des spires 51-54 est empêchée par la goupille 32 de s'écarter du barreau 22 et de se décaler radialement vers l'intérieur, c'est-à-dire de se rapprocher de l'axe A. Chacune des spires est de plus maintenue axialement par les parois du passage dans lequel elle passe, qui sont des surfaces des différentes dents 26A à 26E.

Les passages 26 ont une forme cylindrique, c'est-à-dire la forme d'une portion de cylindre (cette forme pourrait éventuellement être torique), et plus précisément la forme d'un cylindre dont le rayon est égal au rayon R de la section transversale des spires ou très légèrement plus grand (Fig.3). Aussi, chaque spire peut prendre un appui réparti, et non ponctuel, au fond du passage 26 dans lequel elle est placée. Le passage 26 assure le maintien axial de la spire, et limite en outre les mouvements radiaux de la spire dans le sens tendant à éloigner ou rapprocher celle-ci de l'axe A.

Par ailleurs, les axes des surfaces cylindriques des différents passages 26 ne sont pas perpendiculaires à l'axe A. Ces axes (dits 'axes des passages') sont en effet légèrement inclinés par rapport à l'axe du barreau 22, l'angle d'inclinaison (angle a) étant égal à celui que forment les spires du serpentin par rapport à l'axe A du tube 60. Il s'ensuit que lorsque les peignes 20 sont montés dans le tube 60, les axes de leurs barreaux 22 étant alors parallèles à l'axe A, les axes des passages 26 sont localement parallèles aux axes des spires du serpentin, à l'endroit où ces spires prennent appui dans les différents passages 26.

Le maintien et la fixation du dispositif de blocage 30 (la goupille 32) par rapport au peigne 20 sont assurés par les dents du peigne 20.

Dans ce but, les dents situées aux extrémités du barreau 22 ou dents d'extrémité (24A et 24E), ainsi que la dent médiane 24C, sont plus allongées que les dents intermédiaires 24B et 24D. En effet, les dents 24A, 24C et 24E sont allongées et comportent chacune une extrémité aplatie, dans laquelle est formée un trou traversant (un trou pour chacune de ces dents), les trois trous ainsi formés étant alignés suivant un axe parallèle à l'axe du barreau 22 du peigne 20.

Le diamètre de ces trous est choisi de manière à permettre le passage et la libre rotation de la goupille 32 dans ces trous. En passant dans les trois trous ainsi formés, la goupille 32 prend appui sur les trois dents 24A, 24C et 24E ce qui bloque ses déplacements dans le plan perpendiculaire à l'axe du barreau 22, et lui permet ainsi d'assurer sa fonction d'interdiction de tout mouvement des spires tendant à écarter celles-ci du barreau 22.

La goupille 32 a la forme générale d'une barre droite. Cependant, la goupille est en fait creuse, et est constituée par une enveloppe de forme générale globalement tubulaire. Cette enveloppe est fendue suivant un axe de l'enveloppe sur toute la longueur de la goupille, et cela de telle sorte que lorsque la goupille est sans contrainte, les bords de la fente sont légèrement écartés l'un de l'autre. Cette forme permet à la goupille de se comprimer de manière élastique (et non plastique) lorsque les spires appuient sur la goupille, comme cela sera précisé plus loin.

La goupille présente en outre quatre encoches d'appui de spires 32A, 32B, 32C et 32D (Fig.3). Ces encoches sont en forme sensiblement de portions de cylindres ; elles permettent lorsqu'une des spires prend appui sur la goupille, de fournir une surface d'appui étendue, et non ponctuelle, à la spire, ce qui fait que le niveau de contraintes dans la spire reste modéré et que l'apparition d'un pic ponctuel de contraintes est évité.

La surface d'appui s'étend, suivant l'axe du tuyau, sur une étendue le long de l'axe du tuyau au moins égale au diamètre du tuyau.

Les encoches sont espacées deux à deux d'un pas P, et placées sur un même côté de la goupille 32.

Le système de maintien 101 comporte en outre en outre deux supports 40A et 40B, disposés aux extrémités du peigne 22. Ces supports servent à empêcher toute translation et toute rotation du peigne 20, à l'exception de la rotation de celui-ci autour de l'axe du barreau 22, qui reste autorisée notamment pour permettre le montage du système, comme cela va maintenant être décrit.

Les supports 40A et 40B servent aussi à maintenir la goupille 32 suivant la direction axiale du réchauffeur 100. Pour cela, les supports 40A et 40B sont agencés avec une paroi perpendiculaire à l'axe de la goupille 32, qui bloque celle-ci en translation et la contraint à rester axialement (par rapport à l'axe A du barreau) dans la position dans laquelle les encoches sont axialement au même niveau que les spires 51 à 54 et que les différents passages 26.

Pour monter le réchauffeur 100, les opérations à réaliser sont les suivantes :
a) on fournit le tube cylindrique 60, le serpentin 50, et les composants nécessaires pour réaliser trois systèmes de maintien, à savoir : trois peignes 20, trois goupilles 32, et trois paires de supports 40A,40B.
b) on positionne et on fixe alors les trois supports 40A sur la paroi intérieure du tube (chaque support 40A est un support inférieur pour le système de maintien dont il fait partie).
d) on met en place le serpentin 50.
c) on positionne les peignes 20 en les maintenant de telle sorte qu'ils soient rabattus contre la paroi. Pour ce faire, les peignes sont glissés entre la paroi du tube et les spires du serpentin.
e) on fait pivoter les peignes 20 afin que leurs dents soient orientées radialement dans le tube 60 et bloquent axialement les spires 51-54 du serpentin 50.
f) pour chaque système de maintien, on place une goupille 32 en la faisant passer dans les trous des dents 24A, 24C et 24E du peigne 20 (les goupilles 32 sont compressées sans être plastifiées) ;
g) on positionne les supports 40B (chaque support 40B est un deuxième support ou support supérieur, pour le système de maintien dont il fait partie) et on les fixe sur la paroi du tube 60 de manière à achever le blocage des goupilles 32 et par suite, des spires du serpentin 50.

Plus spécifiquement, les opérations de montage à réaliser sont les suivantes :
b) on positionne et on fixe les trois supports 40A sur la paroi du tube 60 ;d) on met en place le serpentin 50,
c) on positionne ensuite les peignes 20, en les maintenant de telle sorte qu'ils soient rabattus contre la paroi ;
e) on fait alors pivoter les peignes 20 afin que leurs dents soient orientées radialement dans le tube 60 et bloquent axialement les spires 51-54 du serpentin 50 ;
f) on place les goupilles élastiques 32, que l'on compresse sans les plastifier, en les faisant passer dans les trous des dents 24A, 24C et 24E (en veillant à ne pas endommager le serpentin 50) ;
g) on positionne les supports 40B et on les fixe sur la paroi du tube 60, ce qui achève le blocage des goupilles 32 et par suite, des spires du serpentin 50.

On notera que lors de l'étape c), les peignes 20 sont mis en place sur les supports 40A de telle sorte que les axes des barreaux 22 soient dirigés suivant l'axe A, et que les dents du peigne soient dirigées suivant une direction non radiale dans le tube 60, qui correspond à la position 'rabattue' du peigne 20. Dans cette position rabattue du peigne 20, de préférence les dents du peigne sont orientées suivant une direction circonférentielle ou du moins sensiblement circonférentielle. Dans cette position, les peignes 20 sont suffisamment fins pour pouvoir passer autour des spires 51-54, entre le tube et le serpentin. Une fois que les peignes 20 sont placés sur les supports 40A, et sont donc axialement (par rapport à l'axe A) dans la position souhaitée, à l'étape e) on les fait pivoter autour de l'axe des barreaux 22, ce qui amène les peignes dans la position représentée sur la figure 1, avec les dents orientées radialement dans le tube 60.

Une fois les opérations a) à g) réalisées, le serpentin 50 est raccordé au circuit de distribution d'hydrogène à travers la paroi du tube 60 à l'aide des raccords 55A et 55B (Fig.1).

Par ailleurs, on notera également que les trois systèmes de maintien 101, 102 et 103 ne sont pas positionnés axialement au même niveau dans le tube 60. Ils sont en effet décalés axialement deux à deux, de telle sorte que la position du système de maintien corresponde axialement à la position des spires qu'il doit maintenir. Ainsi avec trois systèmes de maintien angulairement espacés de 120°, il convient de décaler les systèmes deux à deux d'un pas égal à un tiers du pas P des spires du serpentin 50. Cette disposition est illustrée sur la figure 3, sur laquelle est représenté un cercle C d'axe A passant par le sommet du système 101. Du fait de l'inclinaison de spires du serpentin, le système 102 est décalé axialement d'une distance D1 égale à P/3, et le système 103 d'une distance D2 égale à 2P/3.

Lors du fonctionnement du moteur-fusée 1000, le réchauffeur se comporte de la manière suivante :
L'hydrogène injecté dans serpentin 50 via le raccord 55A est à une température d'environ 40K. Cet hydrogène se réchauffe en passant dans le serpentin et de ce fait, tend à refroidir la paroi du serpentin
Il s'ensuit que la spire 51 se contracte très légèrement (de manière cependant non significative), et que la spire 52 tend à se contracter assez nettement. Du fait de cette contraction, la spire 52 appuie sur la goupille 32, dans l'encoche 32B. Comme la goupille 32 est fendue elle se déforme localement, de manière élastique, pour permettre un léger déplacement radial de la spire 52 vers l'axe A.

Les spires 53 et 54 au contraire ont plutôt tendance à se dilater et augmenter de diamètre (mesuré par rapport à l'axe A) car la température de l'hydrogène contenu dans ces spires est nettement plus élevée que celle de l'hydrogène contenu dans les spires 51 et 52.

La goupille 32 et le peigne 20 sont agencés de telle sorte que lorsque le moteur 1000 fonctionne, de préférence l'ensemble des spires appuient sur la goupille 32, en provoquant des déformations radiales plus ou moins importantes de celle-ci (Fig.3).

Ces déformations radiales sont des déformations élastiques. Cela permet que quelles que soient les variations de température dans le réchauffeur 100, les goupilles maintiennent un appui élastique sur les spires du serpentin 50, évitant ainsi l'apparition de jeux, potentiellement générateurs de vibrations.

Comme le montre la figure 3, au moment de la mise en service du réchauffeur 100, les spires subissent de légères déformations radiales, qui sont contenues par les systèmes de maintien 101, 102 et 103. Ces déformations radiales peuvent être accompagnées par de légers déplacements des spires suivant la direction circonférentielle du tube 60. Comme les peignes 20 sont libres en rotation autour de l'axe des barreaux 22, et que les goupilles 32 sont également libres en rotation autour de leur axe propre, ces déplacements suivant la direction circonférentielle des spires 51-54 peuvent être dans une certaine mesure accompagnés par une rotation des peignes 20 et/ou des goupilles 32 concernées, qui contribue également à limiter le niveau de contraintes atteint dans les spires.

De plus, la légère inclinaison des passages 26 (angle a), leur forme cylindrique qui épouse la forme des spires 51, les encoches aménagées dans les goupilles, permettent que les spires 51 à 54 aient des appuis répartis, et non ponctuels, sur les systèmes de maintien 101 à 103.

Ces différentes caractéristiques permettent aux systèmes de maintien 101, 102, 103 de maintenir le serpentin 50 en position tout en limitant le niveau de contraintes mécaniques dans celui-ci à un niveau minimal.

Le mode de réalisation présenté comporte trois systèmes de maintien et quatre spires. L'invention est naturellement applicable à des nombres quelconques de systèmes de maintien et de spires du serpentin. Les systèmes de maintien sont également exploitables pour des tubes rectilignes ou autre.

Par ailleurs, un système de maintien conforme à l'invention peut être utilisé dans l'industrie spatiale. Il peut également intéresser plus largement toutes les industries dans lesquelles sont utilisés des échangeurs à serpentin soumis à de fortes sollicitations thermiques.

## Revendications

1. Procédé de montage d'un échangeur thermique (100) constitué principalement par un tuyau en serpentin (50) comportant une pluralité de spires (51-54), agencé à l'intérieur d'un tube (60), le procédé comportant les étapes suivantes :
a) on fournit :
le tube (60), le serpentin (50);
un peigne (20) comportant un barreau (22) et une pluralité de dents (24) parallèles, perpendiculaires au barreau ; **caractérisé en ce qu'**on fournit par ailleurs une goupille et deux supports (40A, 40B), aptes à être disposés aux extrémités du peigne et à maintenir le peigne de manière à permettre une rotation de celui-ci autour d'un axe du barreau ;
b) on positionne et on fixe un premier (40A) desdits deux supports sur une paroi intérieure du tube (60) ;
c) on positionne le peigne (20) dans le tube en maintenant le peigne (20) de telle sorte qu'il soit rabattu contre ladite paroi ;
d) on met en place le serpentin (50) ;
e) après les étapes b) et c), on fait pivoter le peigne (20) afin que ses dents (24) soient orientées radialement dans le tube (60) et bloquent axialement des spires du serpentin (50) ;
g) on positionne le deuxième (40B) desdits supports et on fixe celui-ci sur la paroi intérieure du tube (60) ;
h) on fixe la goupille au peigne et/ou aux supports de manière à constituer un dispositif de blocage (30) empêchant toutes les spires ou une partie des spires passant entre lesdites dents de s'écarter du barreau.

2. Procédé de montage selon la revendication 1, **caractérisé en ce que** les étapes g) et h) sont réalisées simultanément en positionnant le deuxième support (40B) sur la paroi intérieure du tube et en fixant la goupille au moins sur celui-ci de manière à bloquer la goupille et à constituer ainsi le dispositif de blocage.

3. Procédé de montage selon la revendication 2, dans lequel la goupille (32) est apte à passer à travers au moins un trou d'une dent du peigne (20) ; et le procédé comporte en outre une étape f), précédant l'étape g), et durant laquelle on met en place la goupille en la faisant passer dans ledit au moins un trou d'une dent du peigne.

4. Système de maintien (101,102,103) pour maintenir au moins un tuyau, comprenant
un peigne (20) comportant un barreau (22) et une pluralité de dents (24) parallèles, perpendiculaires au barreau, et
un dispositif de blocage (30) apte à empêcher ledit tuyau passant entre deux desdites dents de s'écarter du barreau;
le système se caractérisant en ce le système de blocage est constitué essentiellement par une goupille (32) et en ce qu'il comprend en outre deux supports (40A, 40B) disposés aux extrémités du peigne, et maintenant le peigne de manière à permettre une rotation de celui-ci autour d'un axe du barreau.

5. Système selon la revendication 4, dans lequel le dispositif de blocage prend appui sur au moins deux dents (24A,24C, 24E) du barreau.

6. Système selon la revendication 4 ou 5, dans lequel la goupille (32) comprend une enveloppe de forme générale cylindrique fendue suivant un axe de l'enveloppe.

7. Système selon l'une quelconque des revendications 4 à 6, dans lequel le dispositif de blocage présente au moins une encoche d'appui de tuyau (32A-32D).

8. Système selon l'une quelconque des revendications 4 à 7, dans lequel au moins une dent du peigne présente un trou, et la goupille est configurée pour passer dans celui-ci.

9. Système selon l'une quelconque des revendications 4 à 8, dans lequel au moins un passage (26) du peigne entre deux dents adjacentes présente une inclinaison par rapport à un axe du barreau.

10. Système selon l'une quelconque des revendications 4 à 9, dans lequel au moins un passage (26) du peigne entre deux dents adjacentes présente une forme cylindrique ou torique.

11. Ensemble comportant une pluralité de systèmes de maintien (101,102,103) fixés sur une paroi intérieure d'un tube cylindrique (60), disposés de manière axisymétrique autour d'un axe (A) dudit tube, chacun desdits systèmes de maintien étant un système selon l'une quelconque des revendications 4 à 10.

12. Echangeur thermique (100), comportant au moins un système selon l'une quelconque des revendications 4 à 10, et/ou un ensemble selon la revendication 11.

13. Unité de production industrielle (1000), comportant au moins un système selon l'une quelconque des revendications 4 à 10, et/ou un ensemble selon la revendication 11, et/ou un échangeur thermique selon la revendication 12.

14. Moteur pour fusée (1000), comportant au moins un système selon l'une quelconque des revendications 4 à 10, et/ou un ensemble selon la revendication 11, et/ou un échangeur thermique selon la revendication 12.

## Patentansprüche

1. Verfahren zum Montieren eines Wärmetauschers (100), der hauptsächlich aus einem Spiralrohr (50) mit einer Vielzahl von Windungen (51-54) besteht, das in einem Rohr (60) angeordnet ist, wobei das Verfahren die folgenden Schritte umfasst:
a) Bereitstellen:
des Rohres (60), der Spirale (50),
eines Kamms (20), der einen Stab (22) und eine Vielzahl von Zähnen (24) umfasst, die parallel und senkrecht zu dem Stab verlaufen,
**dadurch gekennzeichnet, dass** ferner ein Stift und zwei Halterungen (40A, 40B) bereitgestellt werden, die geeignet sind, an den Enden des Kamms angeordnet zu werden und den Kamm so zu halten, dass seine Drehung um eine Achse des Stabes ermöglicht wird,
b) Positionieren und Befestigen einer ersten (40A) der beiden Halterungen an einer Innenwand des Rohres (60),
c) Positionieren des Kamms (20) in dem Rohr, indem der Kamm (20) so gehalten wird, dass er gegen die Wand geklappt wird,
d) Einsetzen der Spirale (50),
e) nach den Schritten b) und c) Schwenken des Kamms (20), sodass seine Zähne (24) in dem Rohr (60) radial ausgerichtet sind und die Windungen der Spirale (50) axial blockieren,
g) Positionieren der zweiten (40B) der Halterungen und Befestigen dieser an der Innenwand des Rohres (60),
h) Befestigen des Stiftes am Kamm und/oder an den Halterungen, um eine Arretiervorrichtung (30) zu bilden, die verhindert, dass sich alle Windungen oder ein Teil der Windungen, die zwischen den Zähnen verlaufen, von dem Stab wegbewegen.

2. Montageverfahren gemäß Anspruch 1, **dadurch gekennzeichnet, dass** die Schritte g) und h) gleichzeitig durchgeführt werden, indem die zweite Halterung (40B) an der Innenwand des Rohres positioniert und der Stift zumindest an dieser so befestigt wird, dass der Stift fixiert und somit die Arretiervorrichtung gebildet wird.

3. Montageverfahren gemäß Anspruch 2, wobei der Stift (32) in der Lage ist, durch mindestens ein Loch eines Zahns des Kamms (20) durchzulaufen, wobei das Verfahren ferner einen Schritt f) vor dem Schritt g) umfasst, bei dem der Stift eingesetzt wird, indem er durch das mindestens eine Loch eines Zahns des Kamms hindurchgeführt wird.

4. Haltesystem (101,102,103) zum Halten mindestens eines Rohres, umfassend:
einen Kamm (20), der einen Stab (22) und eine Vielzahl von Zähnen (24) umfasst, die parallel und senkrecht zu dem Stab verlaufen, und
eine Arretiervorrichtung (30), die in der Lage ist, zu verhindern, dass sich das Rohr, das zwischen zwei der Zähne durchläuft, von dem Stab wegbewegt,
wobei das System **dadurch gekennzeichnet ist, dass** das Arretiersystem im Wesentlichen aus einem Stift (32) besteht und ferner zwei Halterungen (40A, 40B) umfasst, die an den Enden des Kamms angeordnet sind und den Kamm so halten, dass seine Drehung um eine Achse des Stabes ermöglicht wird.

5. System gemäß Anspruch 4, wobei die Arretiervorrichtung an mindestens zwei Zähnen (24A, 24C, 24E) des Stabes anliegt.

6. System gemäß Anspruch 4 oder 5, wobei der Stift (32) eine im Allgemeinen zylindrische Hülle aufweist, die entlang einer Achse der Hülle geteilt ist.

7. System gemäß einem der Ansprüche 4 bis 6, wobei die Arretiervorrichtung mindestens eine Rohrauflagekerbe (32A-32D) aufweist.

8. System gemäß einem der Ansprüche 4 bis 7, wobei mindestens ein Zahn des Kamms ein Loch aufweist und der Stift so konfiguriert ist, dass er durch dieses hindurchgeht.

9. System gemäß einem der Ansprüche 4 bis 8, wobei mindestens ein Durchgang (26) des Kamms zwischen zwei benachbarten Zähnen eine Neigung in Bezug auf eine Achse des Stabs aufweist.

10. System gemäß einem der Ansprüche 4 bis 9, wobei mindestens ein Durchgang (26) des Kamms zwischen zwei benachbarten Zähnen eine zylindrische oder toroidale Form aufweist.

11. Anordnung mit einer Vielzahl von Haltesystemen (101,102,103), die an einer Innenwand eines zylindrischen Rohres (60) befestigt und achsensymmetrisch um eine Achse (A) des Rohres angeordnet sind, wobei jedes der Haltesysteme ein System gemäß einem der Ansprüche 4 bis 10 darstellt.

12. Wärmetauscher (100), umfassend mindestens ein System gemäß einem der Ansprüche 4 bis 10 und/oder eine Anordnung gemäß Anspruch 11.

13. Industrielle Produktionseinheit (1000), umfassend mindestens ein System gemäß einem der Ansprüche 4 bis 10 und/oder eine Anordnung gemäß Anspruch 11 und/oder einen Wärmetauscher gemäß Anspruch 12.

14. Raketentriebwerk (1000), umfassend mindestens ein System gemäß einem der Ansprüche 4 bis 10 und/oder eine Anordnung gemäß Anspruch 11 und/oder einen Wärmetauscher gemäß Anspruch 12.

## Claims

1. A method for mounting a heat exchanger (100) consisting primarily of a serpentine (50) including a plurality of turns (51-54), arranged inside a tube (60), the method including the following steps:
a) there are provided:
the tube (60), the serpentine (50);
a comb (20) including a bar (22) and a plurality of parallel teeth (24), perpendicular to the bar;
**characterized in that** there are further provided a pin and two supports (40A, 40B), capable of being positioned at the ends of the comb and to hold the comb so as to allow a rotation thereof around an axis of the bar;
b) a first (40A) of said two supports is positioned and attached to an inner wall of the tube (60);
c) the comb (20) is positioned in the tube by holding the comb (20) in such a manner that it is folded against said wall;
d) the serpentine (50) is put in place;
e) after steps b) and c), the comb (20) is pivoted so that its teeth (24) are radially oriented in the tube (60) and axially block the turns of the serpentine (50);
g) the second (40B) of said supports is positioned and is attached to the inner wall of the tube (60);
h) the pin is attached to the comb and/or to the supports so as to constitute a blocking device (30) preventing all the turns or a portion of the turns passing between said teeth to move away from the bar.

2. The mounting method according to claim 1, **characterized in that** steps g) and h) are accomplished simultaneously by positioning the second support (40B) on the inner wall of the tube and by attaching the pin to this at least so as to block the pin and thus constitute the blocking device.

3. The mounting method according to claim 2, wherein the pin (32) is capable of passing through at least one hole in a tooth of the comb (20); and the method further includes a step f), prior to step g), and during which the pin is put in place by having it pass into said at least one hole in a tooth of the comb.

4. A holding system (101, 102, 103) for holding at least one pipe, comprising a comb (20) including a bar (22) and a plurality of parallel teeth (24), perpendicular to the bar, and
a blocking device (30) capable of preventing said pipe passing between two of said teeth to move away from the bar,
the system being **characterized in that** the blocking system consists essentially of a pin (32) and **in that** it further comprises two supports (40A, 40B) positioned at the ends of the comb, and holding the comb in such a manner as to allow rotation thereof around an axis of the bar.

5. The system according to claim 4, wherein the blocking device is supported on at least two teeth (24A, 24C, 24E) of the bar.

6. The system according to claim 4 or 5, wherein the pin (32) comprises a shell of a generally cylindrical shape split along an axis of the shell.

7. The system according to any one of claims 4 to 6, wherein the blocking device has at least one pipe support notch (32A-32D).

8. The system according to any one of claims 4 to 7, wherein at least one tooth of the comb has a hole, and the pin is configured to pass into it.

9. The system according to any one of claims 4 to 8, wherein at least one passage (26) in the comb between two adjacent teeth has an inclination with respect to an axis of the bar.

10. The system according to any one of claims 4 to 9, wherein at least one passage (26) in the comb between two adjacent teeth has a cylindrical or toroidal shape.

11. An assembly comprising a plurality of holding systems (101, 102, 103) attached to an inner wall of a cylindrical tube (60), asymmetrically positioned around an axis (A) of said tube, each of said holding systems being a system according to any one of claims 4 to 10.

12. A heat exchanger (100), including at least one system according to any one of claims 4 to 10, and/or an assembly according to claim 11.

13. An industrial production unit (1000) including at least one system according to any one of claims 4 to 10, and/or an assembly according to claim 11, and/or a heat exchanger according to claim 12.

14. A rocket engine (1000), including at least one system according to any one of claims 4 to 10, and/or an assembly according to claim 11, and/or a heat exchanger according to claim 12.
